# EUROPÄISCHE PATENTSCHRIFT

(11) **EP 0 783 078 B1**
(45) Veröffentlichungstag und Bekanntmachung des Hinweises auf die Patenterteilung: **09.05.2001**
(21) Anmeldenummer: 96119920.5
(22) Anmeldetag: 12.12.1996
(51) Int. Cl.: F16B 31/04, F16B 5/02

(54) **Freileitungsmast aus Stahl-Profil-Gitterstäben**
Lattice tower for overhead line
Pylône métallique en treillis pour lignes électriques aériennes

(30) Priorität: 30.12.1995 DE 19549191
(43) Veröffentlichungstag der Anmeldung: 09.07.1997
(73) Patentinhaber: RWE Net Aktiengesellschaft, 44139 Dortmund (DE); Tessag Technische Systeme und Services Aktiengesellschaft, 60325 Frankfurt (DE)
(72) Erfinder: Kohlmeyer, Arno, Ing., Dipl.-Ing., 45276 Essen (DE); Pohlmann, Heinrich, Ing., Dipl.-Ing., 64390 Erzhausen (DE)
(74) Vertreter: Masch, Karl Gerhard, Dr.

(56) Entgegenhaltungen:
- FR-A- 2 129 181
- US-A- 3 856 066
- US-A- 4 971 498

## Beschreibung

Die Erfindung betrifft einen Freileitungsmast aus Stahlprofil-Gitterstäben, der im Zusammenhang mit der Übertragung und Verteilung von elektrischer Energie eingesetzt wird oder eingesetzt ist, wobei hochvorgespannte geschraubte Verbindungen mit hochfesten Schrauben und/oder hochfesten Paßschrauben, die auf Lochlaibung und für eine konstruktiv vorgegebene Vorspannkraft dimensioniert sind, als Verbindung an den Verbindungsstellen der Stahlprofil-Gitterstäbe im Freileitungsmast, deren Schraublöcher in den Schraublochrandzonen versprödet oder versprödungsgefährdet sind, verwendet werden. - Solche Freileitungsmaste sind Stahlgitterkonstruktionen. Die Stahlgitterstäbe sind in der Stahlgitterkonstruktion an den Verbindungsstellen des Gitterwerkes mit geschraubten Verbindungen versehen. Die Verbindungsstellen des Gitterwerkes, sind wie bei Stahlgitterkonstruktionen üblich, gestaltet.

Freileitungsmaste des beschriebenen Aufbaus und der beschriebenen Zweckbestimmung sind Stahlgitterkonstruktionen besonderer Art, an die hohe Anforderungen in bezug auf Gebrauchstüchtigkeit und Sicherheit gestellt werden. Versagt ein Freileitungsmast, so ist das Versagen ganzer Hochspannungsleitungen oder Hochspannungsleitungsabschnitte der elektrischen Stromversorgung die Folge. Freileitungsmaste aus Stahlprofil-Gitterstäben müssen daher besonderen Vorschriften genügen und werden entsprechend auf Gebrauchstüchtigkeit und Sicherheit überwacht. Werden bei der Überwachung ertüchtigungsbedürftige Stahlprofil-Gitterstäbe ermittelt, so werden diese, erforderlichenfalls auch der vollständige Freileitungsmast, ausgetauscht. Nichtsdestoweniger treten, z. B. bei extremen Wetterbedingungen wie Stürmen hoher Windenergie, singuläre Schadensfälle auf.

Der Erfindung liegt das technische Problem zugrunde, die Gebrauchstüchtigkeit und die Sicherheit von Freileitungsmasten des beschriebenen Aufbaus und der beschriebenen Zweckbestimmung zu verbessern, und zwar dahingehend, daß auch die Zahl der singulären Schadensfälle, z. B. bei extremen Wetterbedingungen mit Sturm, beachtlich reduziert oder ganz unterdrückt wird.

Zur Lösung dieses technischen Problems ist Gegenstand der Erfindung ein Freileitungsmast der eingangs genannten Art, welcher dadurch gekennzeichnet ist, daß die Verbindungen mit Schrauben und/oder Paßschrauben unterlegscheibenartig angeordnete Zwischenelemente aufweisen, welche die Vorspannkraft der Schrauben und/oder der Paßschrauben auf Stahlprofilbereiche außerhalb der versprödeten oder versprödungsgefährdeten Schraubenlochrandzonen übertragen, mit der Maßgabe, daß die Auflagerfläche der Zwischenelemente so dimensioniert ist, daß unter dem Einfluß der vorgegebenen Vorspannkraft der elastische Bereich des Werkstoffes der Stahlprofil-Gitterstäbe nicht verlassen wird.

Die Erfindung geht von der Feststellung aus, daß Schraubenlöcher der bekannten Schraubenverbindungen der Stahlprofil-Gitterstäbe von Freileitungsmasten in Schraubenlochrandzonen Versprödungen aufweisen können, die die Stahlprofil-Gitterstäbe mitbringen, weil die Versprödungen fertigungsbedingt sind, oder die sich im Laufe der Zeit ausbilden. Diese Versprödungen können zu Brüchen führen, wenn der Freileitungsmast insgesamt, z. B. bei den erwähnten extremen Wetterbedingungen mit Sturm, Zug- und Druckbeanspruchungen, Torsionsbeanspruchungen, Biegemomente und stabilitätsmäßige Beanspruchungen aufzunehmen hat, aus denen entsprechende Kräfte und Momente in die Verbindungsstellen einfließen. Das gilt auch, wenn die Verbindungen als hochvorgespannte Schraubenverbindungen ausgeführt sind. Im einzelnen ist hierzu folgendes zu bemerken: Freileitungsmasten aus Stahlprofil-Gitterstäben werden wie andere Stahlgitterkonstruktionen mit geschraubten Verbindungselementen hergestellt. Die Verbindungen werden auf Lochlaibung dimensioniert. Bei Zugbelastungen der Profile erfolgt eine Spannungserhöhung entsprechend dem Kerbfaktor im Schraubenlochrandbereich. Bei ausreichend duktilem, zähem Werkstoffverhalten kann sich bei hoher Belastung der Werkstoff lokal verformen, so daß sich eine gleichmäßige Spannungsverteilung im Restquerschnitt oder Nettoquerschnitt einstellt. Bei spröden Werkstoffen oder in Versprödungsbereichen können die Spannungsspitzen nicht abgebaut werden, so daß eine Traglastverminderung stattfindet. Die Erfindung geht von der Erkenntnis aus, daß eine überraschende Verbesserung der Gebrauchstüchtigkeit und Sicherheit erreicht wird, wenn eine hochvorgespannte geschraubte Verbindung verwendet wird, bei der die Verbindungen mit Schrauben und/oder Paßschrauben unterlegschraubenartig angeordnete metallische Zwischenelemente aufweisen, welche die Vorspannkraft der Schrauben und/oder der Paßschrauben auf Stahlprofilbereiche außerhalb der versprödeten oder versprödungsgefährdeten Schraubenlochrandzonen übertragen. Dabei muß darauf geachtet werden, daß die Auflagerfläche der Zwischenelemente so dimensioniert ist, daß unter dem Einfluß der vorgegebenen Vorspannkraft der elastische Bereich des Werkstoffes der Stahlprofil-Gitterstäbe nicht verlassen wird.

Im einzelnen bestehen im Rahmen der Erfindung mehrere Möglichkeiten der weiteren Ausbildung und Gestaltung. Zu einer bevorzugten Ausführungsform der Erfindung gehört die Maßgabe, daß die Zwischenelemente in ihrem Bohrungsbereich eine Aussparung aufweisen, welche die versprödeten oder versprödungsgefährdeten Schraubenlochrandzonen der Stahlprofil-Gitterstäbe überbrückt. Nach bevorzugter Ausführungsform der Erfindung, der besondere Bedeutung zukommt, sind fernerhin die Zwischenelemente als Federscheiben ausgebildet. Im allgemeinen weisen die Verbindungen mit Schrauben und/oder Paßschrauben mutterseitig das Zwischenelement und schraubenkopfseitig eine Unterlegscheibe auf, die ebenfalls mit einer Aussparung versehen ist, welche die versprödeten und/oder versprödungsgefährdeten Schraubenlochrandzonen der Stahlprofil-Stäbe überbrückt. Die Zwischenelemente können aber auch schraubenkopfseitig angeordnet sein. Zusätzlich kann wie üblich mit Unterlegscheiben gearbeitet werden. Die Lehre der Erfindung ist auch für die als Gitterkonstruktion ausgeführten Traversen anwendbar.

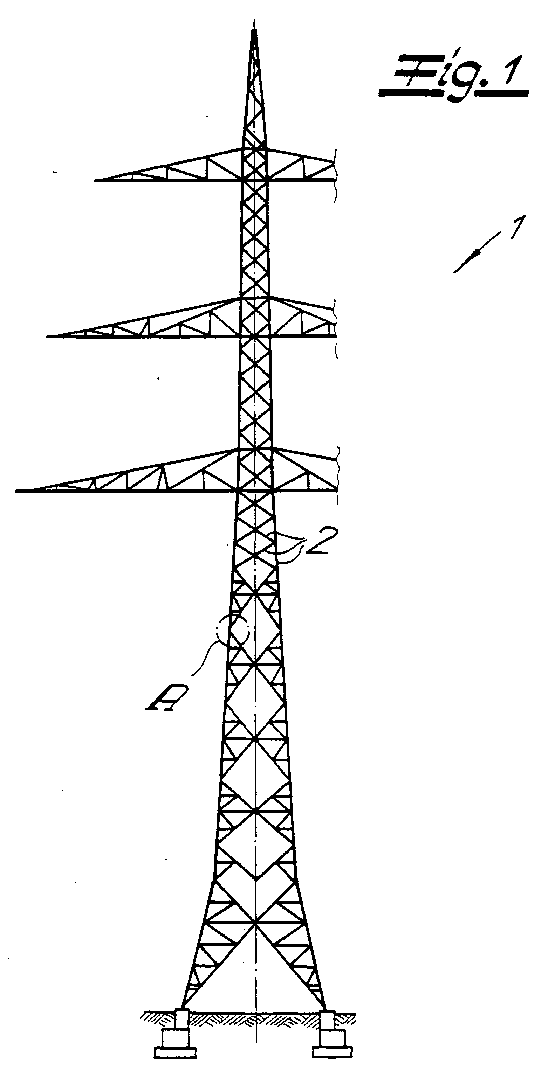

Im folgenden wird die Erfindung anhand einer lediglich ein Ausführungsbeispiel darstellenden Zeichnung ausführlicher erläutert. Es zeigen in schematischer Darstellung
- Fig. 1: einen erfindungsgemäßen Freileitungsmast aus Stahlprofil-Gitterstäben, ausschnittsweise,
- Fig. 2: einen stark vergrößerten Ausschnitt A aus dem Gegenstand der Fig. 1,
- Fig. 3: in nochmaliger Vergrößerung, teilweise im Schnitt einen Ausschnitt aus dem Gegenstand der Fig. 2 und
- Fig. 4: mit den Teilfig. a, b und c eine von der Ausführungsform in Fig. 3 abweichende Gestaltung eines Zwischenelementes.

Der Freileitungsmast 1, zu dem die Figuren gehören, ist aus Stahlprofil-Gitterstäben 2 aufgebaut. Er wird im Zusammenhang mit der Übertragung und Verteilung von elektrischer Energie eingesetzt. Die Stahlprofil-Gitterstäbe 2 sind an Verbindungsstellen 3 miteinander verbunden. Zu der Gitterkonstruktion gehören die sog. Eckstiele 4 und die Diagonalen 5 sowie die Bauteile in den Traversen.

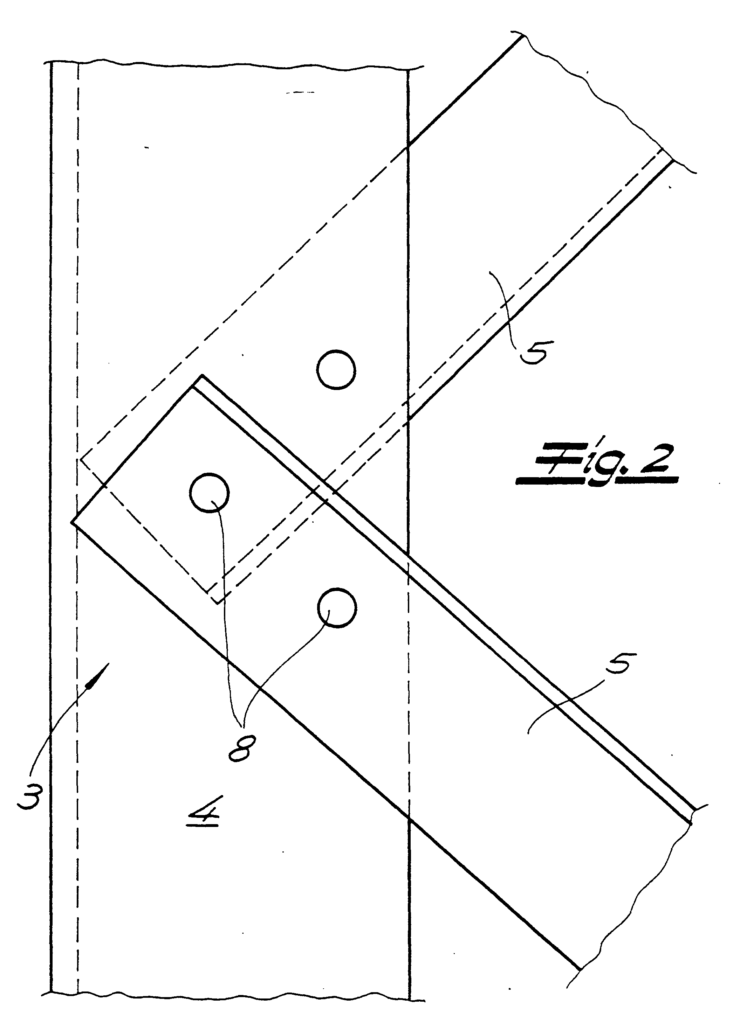

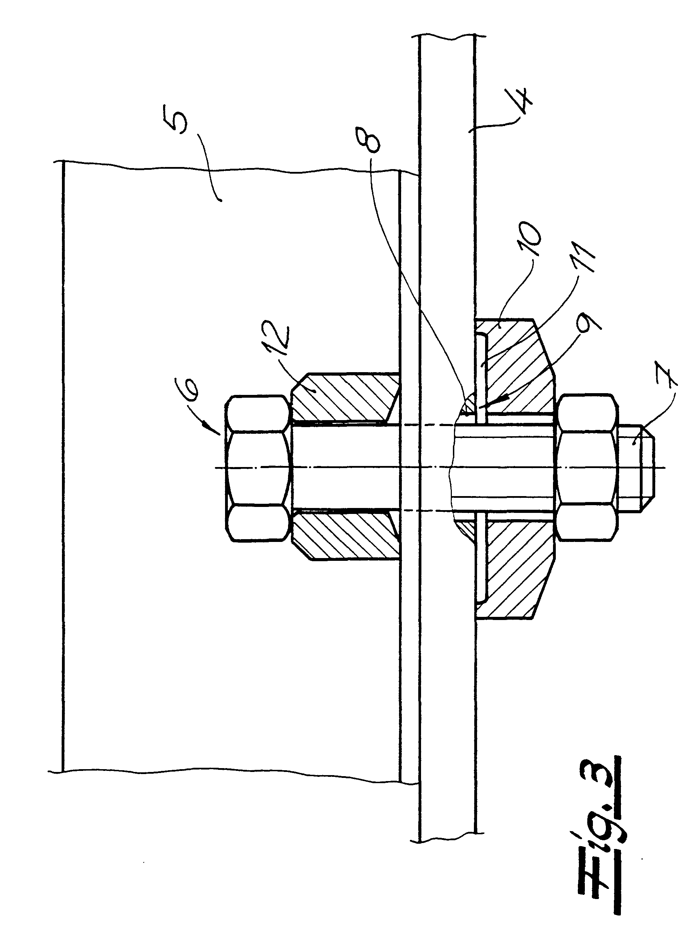

Aus den Fig. 2 und 3 entnimmt man, daß besondere, hochvorgespannte geschraubte Verbindungen 6 mit hochfesten Schrauben und/oder hochfesten Paßschrauben 7 verwendet werden, die auf Lochlaibung und für eine konstruktiv vorgegebene Vorspannung dimensioniert sind. Die Verbindungen 6 befinden sich an den Verbindungsstellen der Stahlprofil-Gitterstäbe 2 im Freileitungsmast 1. Die Schraubenlöcher 8 der Verbindungsstellen sind in den Schraubenlochrandzonen 9 aus den dargelegten Gründen versprödet oder versprödungsgefährdet. Die Anordnung ist so getroffen, daß die Verbindung mit Schrauben und/oder Paßschrauben 7 unterlegscheibenartig angeordnete metallische Zwischenelemente 10 aufweisen, welche die Vorspannkraft der Schrauben oder Paßschrauben 7 auf Stahlprofilbereiche außerhalb der versprödeten oder versprödungsgefährdeten Schraubenlochrandzonen 9 übertragen. Um dieses deutlich zu machen, wurde in der Fig. 3 das Zwischenelement 10 im Schnitt dargestellt. Die hochvorgespannten geschraubten Verbindungen 6 sind besonders ausgelegt, und zwar so, daß die Auflagerfläche der Zwischenelemente 10 so dimensioniert ist, daß unter dem Einfluß der vorgegebenen Vorspannkraft der elastische

Bereich des Werkstoffes der Stahlprofil-Gitterstäbe 2 nicht verlassen wird. Im Ausführungsbeispiel und nach bevorzugter Ausführungsform der Erfindung weisen die Zwischenelemente 10 in ihrem Bohrungsbereich eine Aussparung 11 auf, welche die versprödeten oder versprödungsgefährdeten Schraubenlochrandzonen 9 der Stahlprofil-Gitterstäbe 2 überbrückt.

Im Ausführungsbeispiel und nach bevorzugter Ausführungsform der Erfindung sind die Zwischenelemente 10 als Federscheiben ausgebildet. In der Fig. 3 erkennt man, daß die Schrauben 7 mutterseitig das Zwischenelement 10 und schraubenkopfseitig eine Unterlegscheibe 12 aufweisen.
Diese mag ebenso wie das Zwischenelement 10 eine Aussparung aufweisen, welche die versprödeten oder versprödungsgefährdeten Schraubenlochrandzonen 9 der Stahlprofil-Gitterstäbe 2 überfaßt.

Die Erfindung berücksichtigt die Tatsache, daß bei Freileitungsmasten die Schraubenlochrandzonen 9 hohe und kritische Beanspruchungen erfahren. Die Erfindung erreicht eine Entlastung der versprödeten oder versprödungsgefährdeten Schraubenlochrandzonen 9 durch eine gleitfeste, nach Maßgabe der konstruktiven Bedingungen vorgespannte Verbindung, die mit hochfesten Schrauben oder hochfesten Paßschrauben 7 durchgeführt wird. In DIN VDE 0210 sind entsprechende Schrauben aufgeführt. Das erwähnte Zwischenelement 10 bewirkt eine Vergrößerung der Auflagerfläche, und reduziert folglich die Flächenpressung, die über die vorgespannten Schrauben 7 erzeugt wird. Die erwähnte Aussparung 11 im Bohrungsbereich des Zwischenelementes 10 verhindert die Übertragung dieser axialen Vorspannkräfte auf die versprödeten oder versprödungsgefährdeten Schraubenlochrandzonen 9. Dadurch werden die Spannungen in diesem Bereich, insbesondere bei Zugbelastungen der Stahlprofil-Gitterstäbe 2, reduziert. Solche Zugbelastungen treten bei den beschriebenen Beanspruchungen von Freileitungsmasten 1 unvermeidbar auf.

Das erfindungsgemäße Verfahren nach Patentanspruch 5 bewirkt den erheblichen Vorteil, daß zur Ertüchtigung von Freileitungsmasten 1 Stahlprofil-Gitterstäbe 2 nicht mehr ausgetauscht werden müssen.

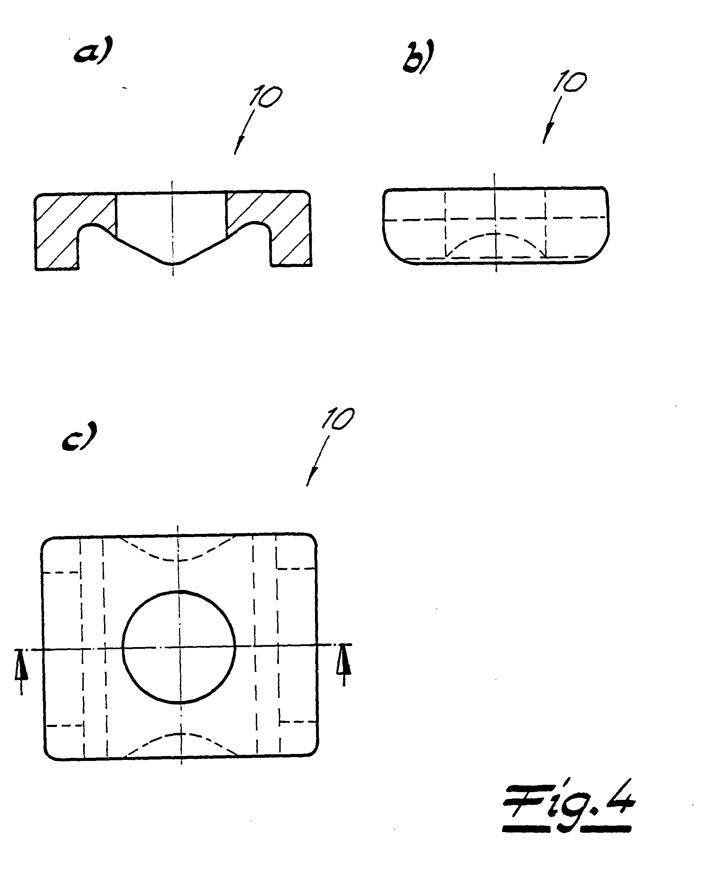

Das Zwischenelement 10 in Fig. 3 mag rund ausgeführt sein. Die Fig. 4 mit den Teilfig. a, b und c zeigt demgegenüber ein als Vierkantscheibe ausgeführtes Zwischenelement 10. In der Fig. 3 erkennt man auch eine Unterlegscheibe 12, die den dort eingetragenen Querschnitt aufweist.

## Patentansprüche

1. Freileitungsmast (1) aus Stahlprofil-Gitterstäben (2), der im Zusammenhang mit der Übertragung und Verteilung von elektrischer Energie eingesetzt wird oder eingesetzt ist, wobei hochvorgespannte geschraubte Verbindungen (6) mit hochfesten Schrauben und/oder hochfesten Paßschrauben (7), die auf Lochlaibung und für eine konstruktiv vorgegebene Vorspannkraft dimensioniert sind, als Verbindung (6) an den Verbindungsstellen der Stahlprofil-Gitterstäbe (2) im Freileitungsmast (1), deren Schraubenlöcher (8) in den Schraubenlochrandzonen (9) versprödet oder versprödungsgefährdet sind, verwendet werden, dadurch gekennzeichnet,
daß die Verbindungen mit Schrauben und/oder Paßschrauben (7) unterlegscheibenartig angeordnete Zwischenelemente (10) aufweisen, welche die Vorspannkraft der Schrauben und/oder der Paßschrauben (7) auf Stahlprofilbereiche (2) außerhalb der versprödeten oder versprödungsgefährdeten Schraubenlochrandzonen (9) übertragen,
mit der Maßgabe, daß die Auflagerfläche der Zwischenelemente so dimensioniert ist, daß unter dem Einfluß der vorgegebenen Vorspannkraft der elastische Bereich des Werkstoffes der Stahlprofil-Gitterstäbe (2) nicht verlassen wird.

2. Freileitungsmast nach Anspruch 1 mit der Maßgabe, daß die Zwischenelemente (10) in ihrem Berührungsbereich eine Aussparung (11) aufweisen, welche die versprödeten oder versprödungsgefährdeten Schraubenlochrandzonen (9) der Stahlprofil-Gitterstäbe (2) überbrücken.

3. Freileitungsmast nach einem der Ansprüche 1 oder 2 mit der Maßgabe, daß die Zwischenelemente (10) als Federscheiben ausgebildet sind.

4. Freileitungsmast nach einem der Ansprüche 1 bis 3, mit der Maßgabe, daß die Verbindungen mit Schrauben und/oder Paßschrauben (7) mutterseitig das Zwischenelement (10) und schraubenkopfseitig eine Unterlegscheibe (12) aufweisen, die eine Aussparung aufweist, welche die versprödeten oder versprödungsgefährdeten Schraubenlochrandzonen (9) der Stahlprofil-Gitterstäbe (2) überfassen.

## Claims

1. An overhead-line mast (1) made of steel profile lattice bars (2) and used in connection with transmission and distribution of electrical energy, wherein highly prestressed screwed connections (6) comprising high-strength screws and/or high-strength fitted bolts (7), dimensioned in accordance with the pressure on the hole face and for a prestressing force determined by the construction, are used as connections (6) to the connecting places of the steel profile lattice bars (2) in the overhead-line mast (1), where the edge zones (9) of the screw holes (8) are embrittled or in danger of embrittlement, characterised in that
the screw and/or fitted-bolt connections (7) comprise intermediate elements (10) disposed like washers and transmitting the prestressing force of the screws and/or fitted bolts (7) to steel profile zones (2) outside the screw hole edge zones (9) which are embrittled or in danger of embrittlement,
with the proviso that the bearing surface of the intermediate elements is so dimensioned that there is no departure from the elastic range of the material for the steel profile lattice bars (2) as a result of the preset prestressing force.

2. An overhead-line mast according to claim 1, with the proviso that the intermediate elements (10) in the region of their contact have a recess (11) which bridges the screw or bolt hole edge zones (9) embrittled or in danger of embrittlement in the steel profile lattice bars (2).

3. An overhead-line mast according to claim 1 or 2, subject to the proviso that the intermediate elements (10) are spring washers.

4. An overhead-line mast according to any of claims 1 to 3, subject to the proviso that the connections comprising screws and/or fitted bolts (7) have the intermediate element (10) adjacent the nut and a washer (12) adjacent to the screwhead, the washer having a recess which extends over the screw or bolt hole edge zones (9) embrittled or in danger of embrittlement in the steel profile lattice bars (2).

## Revendications

1. Pylône (1) pour lignes aériennes fait d'un treillis de barres profilées d'acier (2) que l'on installe ou qui est installé en liaison avec la transmission et la distribution d'énergie électrique, dans lequel on utilise des liaisons vissées (6) fortement précontraintes avec des vis très résistantes et/ou des vis de précision (7) très résistantes, qui sont dimensionnées en fonction de la paroi du trou et pour une force de précontrainte définie par la construction, en tant que liaison (6) aux points de liaison du treillis de barres profilées d'acier (2) dans le pylône (1) pour lignes aériennes, dont les trous de vis (8) sont fragilisés ou menacés de fragilisation dans les zones de bordure (9) des trous de vis, caractérisé
en ce que les liaisons avec vis et/ou vis de précision (7) comportent des éléments intermédiaires (10) disposés à la manière de rondelles, qui transmettent la force de précontrainte des vis et/ou des vis de précision (7) aux zones (2) des profilés d'acier, à l'extérieur des zones de bordure (9) des trous de vis, fragilisées ou menacées de fragilisation,
à cette condition que la surface de support des éléments intermédiaires soit dimensionnée de manière que sous l'influence de la force de précontrainte donnée, on ne sorte pas du domaine élastique du matériau du treillis de barres profilées d'acier (2).

2. Pylône pour lignes aériennes selon la revendication 1, caractérisé en ce que les éléments intermédiaires (10) présentent, dans leur zone de contact, une découpe (11) qui ponte les zones de bordure (9) fragilisées ou menacées de fragilisation des trous de vis du treillis en barres profilées d'acier (2).

3. Pylône pour lignes aériennes selon l'une des revendications 1 ou 2, caractérisé en ce que les éléments intermédiaires (10) sont réalisés sous la forme de disques élastiques.

4. Pylône pour lignes aériennes selon l'une des revendications 1 à 3, caractérisé en ce que les liaisons avec vis et/ou vis de précision (7) comportent côté écrou, l'élément intermédiaire (10) et côté tête de vis, une rondelle (12), qui présente une découpe, laquelle passe au-dessus des zones de bordure (9) fragilisées ou menacées de fragilisation des trous de vis, du treillis de barres profilées d'acier (2).
